# EUROPEAN PATENT APPLICATION

(11) **EP 2 442 466 A2**
(43) Date of publication of application: **18.04.2012**
(21) Application number: 11009013.1
(22) Date of filing: 18.10.2004
(51) Int. Cl.: H04H 60/73, H04H 40/18

(54) **Digital audio/multimedia broadcasting receiver**

(30) Priority: 31.10.2003 KR 20030076687
(62) Divisional of application: 04024774.4
(71) Applicant: Samsung Electronics Co., Ltd., Suwon-si, Gyeonggi-do 443-742 (KR)
(72) Inventor: Lee, Jeong-sang, Youngdeungpo-gu Seoul (KR)
(74) Representative: Grünecker, Kinkeldey, Stockmair & Schwanhäusser

(57) **Abstract**

The present invention relates to a digital audio/multimedia broadcasting (DAB/DMB) receiver. The receiver according to the present invention comprises a Radio Frequency (RF) unit for receiving a first broadcast signal transmitted from a first broadcasting station selected from plural broadcasting stations transmitting digital audio broadcasting (DAB) transmission frames; a modem unit for selecting first content out of plural contents contained in the first broadcast signal that the RF unit receives and outputting corresponding data; a decoding unit for receiving and decoding the data of the first content outputted from the modem unit; and a control unit for generating a control signal for controlling the RF unit and the modem unit based on DAB multiplex configuration information contained in the first broadcast signal. The control unit includes a user interface unit for providing an input means for desired broadcasting station and contents; a memory unit for storing the DAB multiplex configuration information; a processor for generating the control signal according to an input signal based on the DAB multiplex configuration information stored in the memory unit, and sending the control signal to the RF unit and the modem unit; and a display unit for displaying the DAB multiplex configuration information stored according to a signal inputted through the user interface unit. The present invention uses the DAB multiplex configuration information to control the RF unit and the modem unit, to thereby reduce loads on the control unit. Further, the present invention can efficiently use a memory space by use of an Sld table, and the Command Sets according to the present invention can support frames of packet mode.

## Description

### BACKGROUND OF THE INVENTION

### Field of the Invention

The present invention relates to a digital audio broadcasting (DAB) and digital multimedia broadcasting (DMB) receiver.

### Description of the Related Art

In current, the transmission system for broadcasting media is changing from the analog transmission system to the digital transmission system, and, in such a change process, two systems have been mainly proposed for the DAB systems. One of them is the EUREKA-147 DAB system jointly proposed in Europe by a consortium of broadcasters, and the other is the In-band On-channel (IBOC) DAB system proposed by the United States. Currently, many countries are preparing or launching, based on the European DAB system, the DMB capable of supporting data services and motion picture services in addition to audio services.

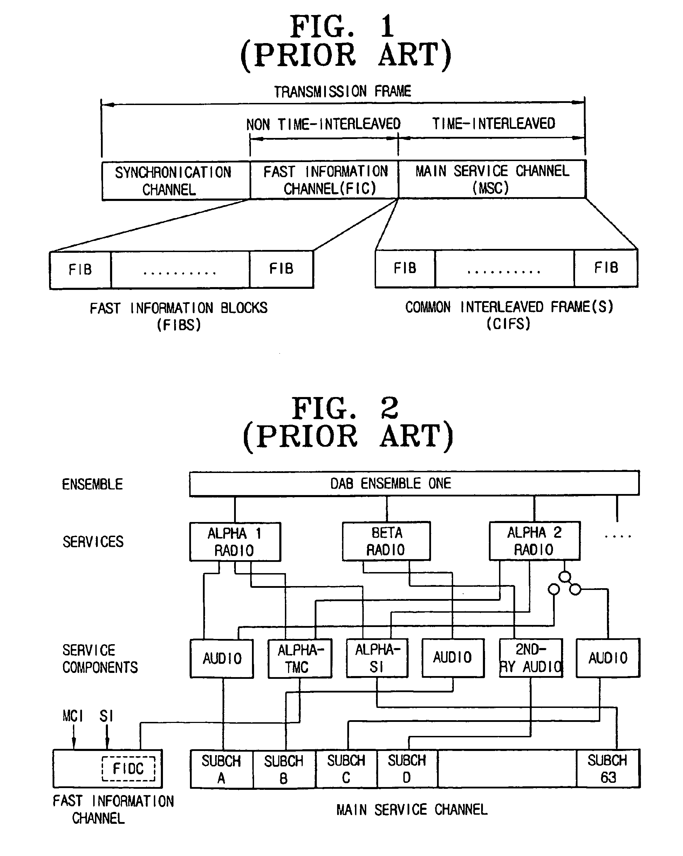

FIG. 1 is a view for showing a structure of the European DAB transmission frame. As shown in FIG. 1, the European DAB system transmits frames each consisting of a synchronization channel, a fast information channel (FIC), and a main service channel (MSC) to provide services. The synchronization channel includes timing information and a reference frequency for synchronizing with and decoding a received signal, the FIC consists of plural fast information blocks (FIBs) and transfers information for correctly decoding multiplex configuration information and services information, and the MSC includes plural multiplexed audio frames and data packets.

The FIC consists of Multiplex configuration information (MCI), service information (SI), and fast information data channel (FIDC), and the MCI includes information on service kinds, locations, types and so on, so as to be used to interpret the MSC. On the other hand, the SI includes information on service titles, channels, and so on, and the FIDC provides emergency data services such as traffic message channel (TMC), emergency warning system (EWS), and so on.

FIG. 2 is a view for exemplarily showing a multiplex configuration of the DAB included in the MCI. The multiplex configuration of the DAB has an ensemble at its highest level of its hierarchy, and subsequently has services and service components in the hierarchical order, and service contents are physically transmitted in plural sub- . channels of the MSC. In here, the ensemble refers to a broadcast station, the services refer to broadcast program kinds such as sports, news, educations, entertainment, and so on, and the service components refer to broadcast programs to be substantially provided, such as English conversation, culture lectures, high school math 1, and so on, for example.

A mobile and fixed DAB/DMB receiver receives the broadcast signal outputted in such a configuration . The DAB/DMB receiver has an antenna, a signal processing unit for processing the received digital broadcast signal, a storage unit for storing received broadcast data, and a control unit for controlling the individual units built therein. As for the DAB receiver, a method for controlling the signal processing unit has to be provided together with a user interface in order for a user to select contents, and a command set has to be defined for communications between the signal processing unit and the control unit.

Descriptions will be made on prior art related to the control method, contents selection method, and command set for the DAB receiver, as below.

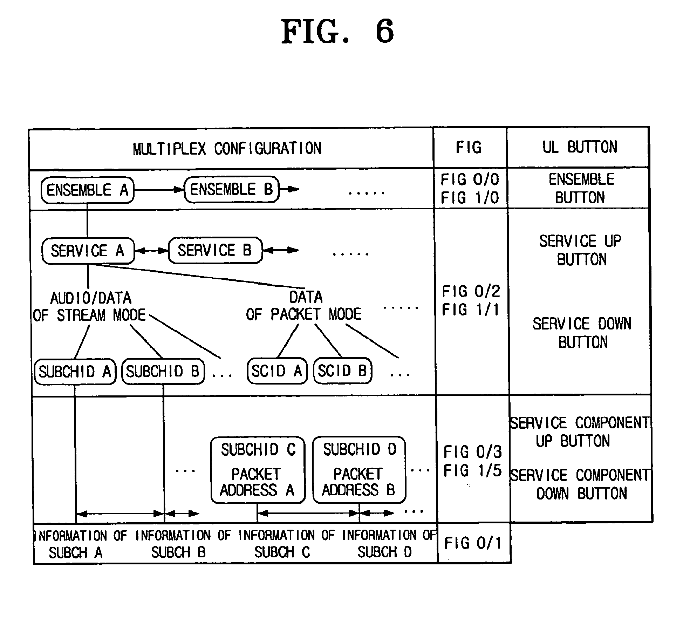

First, U.S. Publication No. 2002/0094040 discloses a method for detecting a specific service of an ensemble out of a different ensemble when the ensemble becomes weakened due to the changes of signal reception circumstances. In here, the service linking information (FIG 0/6: FIG type 0, extension 6), which is one piece of service information (SI), is used to detect the specific service from a different ensemble. That is, the control unit decodes the FIG 0/6 out of the FIC and instructs the signal processing unit to select and output the specific service of the different ensemble. However, the method has a problem that the control unit takes an extra load in decoding the FIG 0/6 of complicated structure.

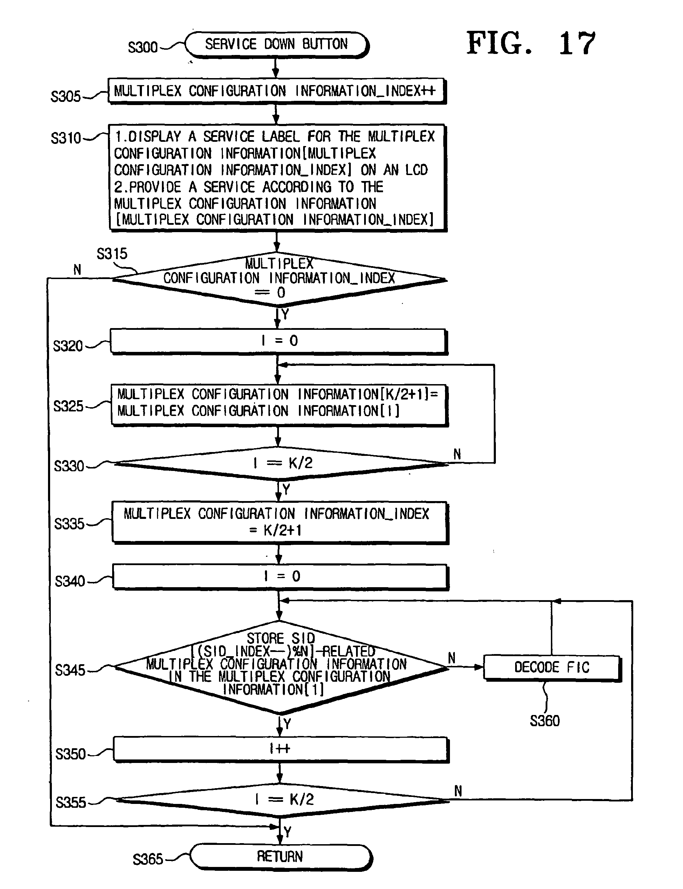

Next, EP 1 204 231 discloses a method for selecting contents that a user wants. In here, the program type (FIG 0/17) and the label information (FIG 1/0, FIG 1/1, FIG 1/4, FIG 1/5) of the FIC are used to provide specific contents. The method also has a problem that the control unit takes a load in decoding the FIG 0/17 every time a user selects his or her desired services or that the memory is wasted since the information on the FIG 0/17 is stored in advance for use.

Further, the method proposed in the European DAB standard is to make selections based on the sub-channel identifier (SubChId) in the stream mode, and based on the service component identifier (SCId) in the packet mode. However, the method has a disadvantage that no information is provided to a user when the level above the service components, that is, the ensemble level and the services level are to be changed.

On the other hand, command sets are required for communications between the control unit and the signal processing unit, and, typically, there exist the command sets of HITACHI corporation Ltd. and the command sets of ATMEL corporation Ltd.

First of all, HITACHI corporation Ltd. refers to the command sets as a control interface protocol (CIP), in which there are 41 command sets for controlling the DAB receiver and 17 of the 41 command sets are as below for controlling a modem unit selecting and outputting specific contents.
Get Status
Clear Commands
Reset
Set Center Frequency
Get Center Frequency
Get Mode
Get Acquisition User Interface and Tracking Status
Get RSSI (Received Signal Strength Indicator)
Read Tracking Data
Write Tracking Data
Set Interesting FIGs
Get FIG Data
Clear FIG Data
Move To Next Audio Service
Set Channel Selection
Get Channel Selection
Get BER Estimate

The structure of a command frame for the above is as below.

| | | | |
|---|---|---|---|
| Command (1-byte) | Index (1-byte) | Size (1-byte) | Data (...) |

In the above frame structure, the Command is an identifier for a command set, the Index is a binary counter incrementing every time the command set is generated. The Size indicates the length of data to follow, and the Data is the content of a corresponding command set. A frame structure in response to the command frame is as below.

| | | | |
|---|---|---|---|
| Status (1-byte) | Index (1-byte) | Size (1-byte) | Data (...) |

The Status indicates a status of the entire DAB receiver, the Index copies the Index that the Command set has with respect to the corresponding response.

Next, descriptions will be made on the command sets of ATMEL corporation Ltd. There are 30 command sets for controlling the DAB receiver, and 10 of the command sets are for controlling the modem unit as below.
set DAB system mode
set CIF counter and occurrence change
set current SbChId long form
set next SbChId long form
set global configuration
read global status
read synchronization status
read AIC data
read FIC data

The protocol frame structure for commands of the command sets of ATMEL corporation Ltd. is as below.

| | | | | | | | |
|---|---|---|---|---|---|---|---|
| MSB | | | | | | | LSB |
| 0x2B | | | | | | WR/RD | |
| DATA | | | | | | | |

The frame structure in response to the above is as above.

The above command sets have a problem that they can not support the occasions that the DAB transmission frames are in packet mode.

### SUMMARY OF THE INVENTION

The present invention has been developed in order to solve the above drawbacks and other problems associated with the conventional arrangement. An aspect of the present invention is to provide a DAB/DMB receiver having a user interface capable of easily inputting contents that a user wants, reducing loads on a control unit by using DAB multiplex configuration information, and efficiently using a memory.

The foregoing and other objects and advantages are substantially realized by providing a digital audio broadcasting/digital multimedia broadcasting (DAB/DMB) receiver comprising an Radio Frequency (RF) unit for receiving a first broadcast signal transmitted from a first broadcasting station selected from plural broadcasting stations transmitting digital audio broadcasting (DAB) transmission frames; a modem unit for selecting first content out of plural contents contained in the first broadcast signal that the RF unit receives and outputting corresponding data; a decoding unit for receiving and decoding the data of the first content outputted from the modem unit; and a control unit for generating a control signal for controlling the RF unit and the modem unit based on DAB multiplex configuration information contained in the first broadcast signal. The control unit includes a user interface unit for providing an input means for desired broadcasting station and contents; a memory unit for storing the DAB multiplex configuration information; a processor for generating the control signal according to an input signal based on the DAB multiplex configuration information stored in the memory unit, and sending the control signal to the RF unit and the modem unit; and a display unit for displaying the DAB multiplex configuration information stored according to a signal inputted through the user interface unit.

The DAB multiplex configuration information is information on ensembles, services, and service components consisting of DAB multiplex configuration hierarchy.

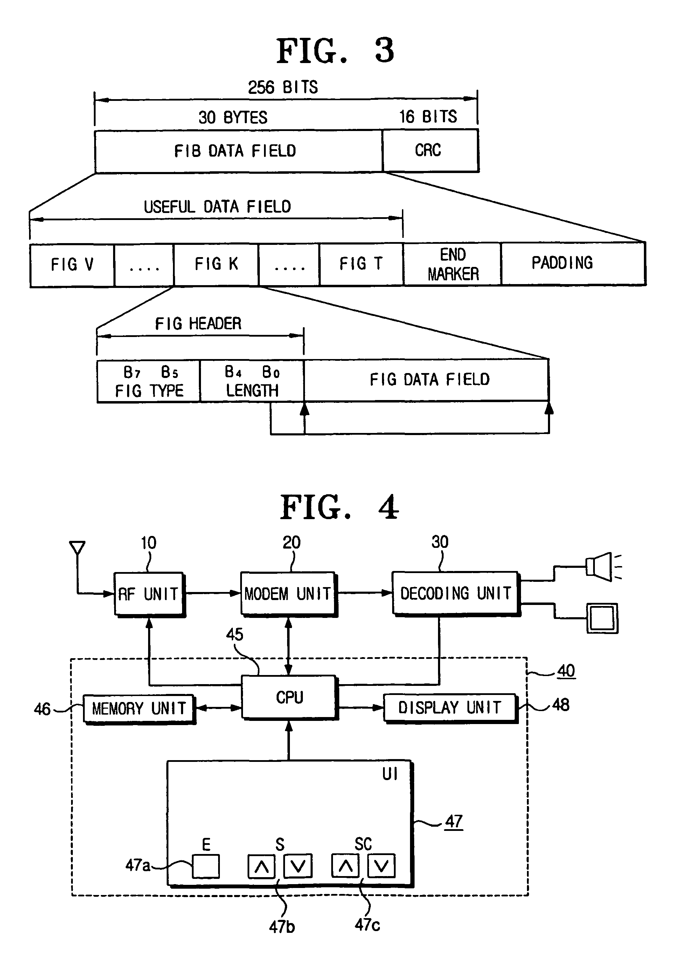

The DAB/DMB receiver according to the present invention can receive, if the first broadcast signal containing the first content is received at a lower level than a predetermined reference level, a second broadcast signal containing the first content. Preferably, if the DAB transmission frame is in stream mode, the DAB multiplex configuration information is FIG 0/2 containing the information on the services, and FIG 0/2 standing for Fast Information Group type 0, extension 2, and, further, if the transmission frame is in packet mode, the DAB multiplex configuration information is preferably the FIG 0/2 containing the information on the services and FIG 0/3 containing the information on the service components.

In the meantime, if the first broadcast station is required to be tuned through the user interface unit, the DAB multiplex configuration information is preferably FIG 0/0 containing the information on the ensembles and FIG 1/0 containing the information on ensemble labels.

Further, if the first content is required through the user interface unit and the transmission frame is in stream mode, the DAB multiplex configuration information preferably is FIG 0/2 containing information on services and FIG 1/1 containing label information on services.

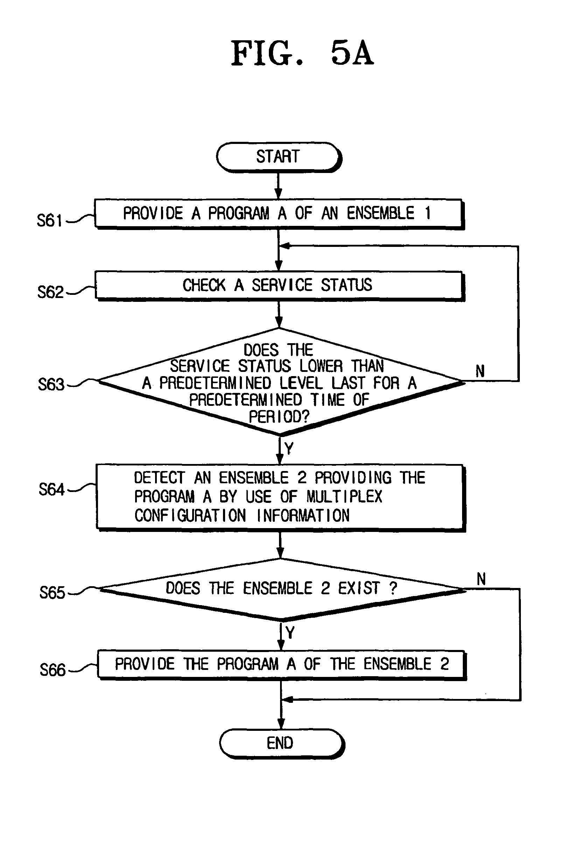

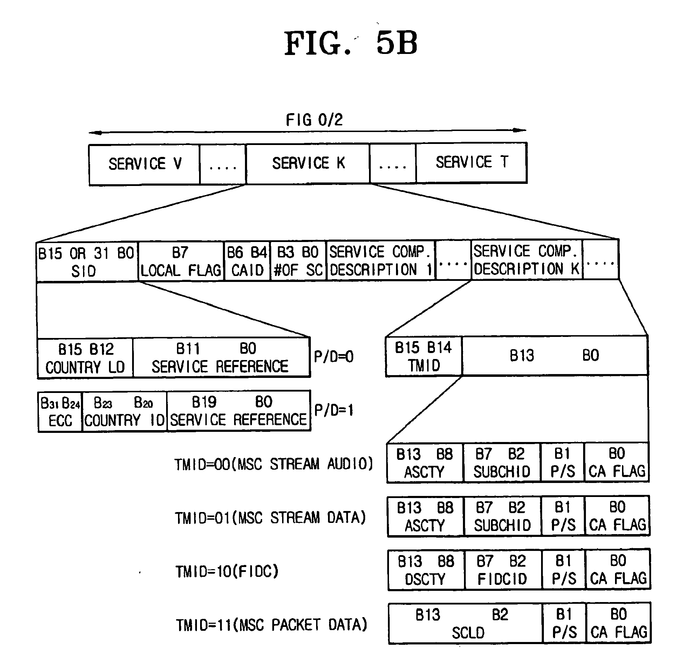

If the first content is required through the user interface unit and the transmission frame is in packet mode, the DAB multiplex configuration information preferably is FIG 0/2 and FIG 0/3 containing information on service components and FIG 1/1 and FIG 1/5 containing label information on service components. Command Sets for communications between the control unit and the modem unit include commands for notifying of address information on packets containing the first content.

The user interface unit includes a first operation button formed of one direction button for outputting an input signal selecting an ensemble; a second operation button formed of two direction buttons each outputting an input signal selecting a service; and a third operation button formed of two direction buttons each outputting an input signal selecting a service component.

Preferably, if the memory unit has memory space insufficient to store the entire multiplex configuration information, the processor sequentially tabulates identifiers (Ids) for identifying individual services, for example, n services, that the first broadcast signal provides so as to generate an service Id (SId) table. The memory unit sequentially stores the SId table and k pieces of multiplex configuration information on the services including a service being currently received.

Preferably, if a kth stored multiplex configuration information is read out according to an input signal, multiplex configuration information stored from the (k/2+1)th to the kth moves into memory locations in which multiplex configuration information stored from the first to the (k/2)th, and k/2 pieces of multiplex configuration information after the (k/2)th stored multiplex configuration information is sequentially stored in the (k/2+1)th to kth memory locations.

In the meantime, preferably, if a first stored multiplex configuration information is read according to the input signal, multiplex configuration information stored from the first to the (k/2)th moves into memory locations in which multiplex configuration information stored from the (k/2+1)th to the kth is stored, and k/2 pieces of multiplex configuration information prior to the (k/2+1)th stored multiplex configuration information are sequentially stored in the first to (k/2)th memory locations.

A DAB/DMB broadcast signal reception method according to the present invention comprises steps of (a) receiving a first broadcast signal transmitted from a first broadcasting station selected out of plural broadcasting stations transmitting DAB transmission frames, and selecting and outputting first content of plural contents contained in the first broadcast signal; (b) checking a reception state of the first broadcast signal containing the first content; (c) detecting a second broadcasting station providing the first content based on the DAB multiplex configuration information on the DAB transmission frame that the first broadcasting station transmits, if the reception state of the first broadcast signal is lower than a predetermined reference level in the step (b); and (d) receiving a second broadcast signal transmitted from the second broadcasting station, and selecting and outputting the first content contained in the second broadcast signal.

Preferably, if the transmission frame is in stream mode, the DAB multiplex configuration information is FIG 0/2 containing information on services, and, if the transmission frame is in packet mode, the DAB multiplex configuration information is FIG 0/2 containing information on services and FIG 0/3 containing information on service components.

A desired contents reception method in a DAB/DMB broadcast signal, receiving a first broadcast signal transmitted from a first broadcasting station selected from plural broadcasting stations transmitting DAB transmission frames, and selecting and outputting first content desired out of plural contents contained in the first broadcast signal, according to the present invention, comprises steps of (a) displaying options of a DAB multiplex configuration consisting of ensembles, services, and service components, and selecting any of the options; (b) displaying a list of the ensembles if the ensembles option is selected from the step (a), and selecting any of the ensembles; (c) receiving the first broadcast signal of the first broadcasting station corresponding to an ensemble selected in the step (b), and storing the DAB multiplex configuration information of the DAB transmission frame contained in the first broadcast signal; (d) displaying a list of the services provided in the selected ensemble based on the stored DAB multiplex configuration information if the services item is selected in the step (a), and selecting any of the services; (e) displaying a list of the service components contained in the selected service based on the stored DAB multiplex configuration information if the service components item is selected in the step (a), and selecting any of the service components; and (f) selecting and outputting the first content in the received first broadcast signal corresponding to the selected service component.

Preferably, the DAB multiplex configuration information in the step (d) is FIG 0/2 containing information on the services and FIG 1/1 containing information on service labels.

Preferably, if the DAB transmission frame is in stream mode, the DAB multiplex configuration information in the step (e) is the FIG 0/2 containing the information on the services and the FIG 1/1 containing the information on the service labels.

Further, preferably, if the DAB transmission frame is in packet mode, the DAB multiplex configuration information in the step (e) is FIG 0/2 and FIG 0/3 containing information on the services and the service components and FIG 1/1 and FIG 1/5 containing information on service component labels.

A method for storing DAB multiplex configuration information of a DAB broadcast signal, receiving a first broadcast signal transmitted from a first broadcasting station selected from plural broadcasting stations transmitting DAB transmission frames and storing DAB multiplex configuration information contained in a first broadcast signal, according to the present invention, comprises steps of (a) sequentially tabulating identifiers (Ids) for identifying individual services, for example, n services that the first broadcast signal provides, and generating a service Id (SId) table; and (b) sequentially storing in a memory unit the SId table and the multiplex configuration information on k (k<n) services including a service being currently received.

Preferably, if a kth stored multiplex configuration information is read out according to an input signal, multiplex configuration information stored from the (k/2+1)th to the kth moves into memory locations in which multiplex configuration information stored from the first to the (k/2)th, and k/2 pieces of multiple structure information after the (k/2)th stored multiplex configuration information is sequentially stored in the (k/2+1)th to kth memory locations.

Preferably, if a first stored multiplex configuration information is read according to the input signal, multiplex configuration information stored from the first to the (k/2)th moves into memory locations in which multiplex configuration information stored from the (k/2+1)th to the kth is stored, and k/2 pieces of multiplex configuration information prior to the (k/2+1)th stored multiplex configuration information are sequentially stored in the first to (k/2)th memory locations.

### BRIEF DESCRIPTION OF THE DRAWINGS

The above aspects and features of the present invention will be more apparent by describing certain embodiments of the present invention with reference to the accompanying drawings, in which:

FIG. 1 is a view for showing a structure of a digital audio broadcasting (DAB) transmission frame;

FIG. 2 is a view for illustrating a DAB multiplex configuration;

FIG. 3 is a view for showing a structure of a fast information block (FIB);

FIG. 4 is a block diagram for showing a digital audio broadcasting/digital multimedia broadcasting (DAB/DMB) receiver according to an embodiment of the present invention;

FIG. 5A is a flow chart for explaining a method for detecting from a different ensemble a specific program in reception according to an embodiment of the present invention;

FIG. 5B is a view for showing a structure of a fast information group (FIG) 0/2;

FIG. 6 is a view for explaining a contents selection by use of the DAB multiplex configuration;

FIG. 7 is a flow chart for explaining a process for providing a program that a user wants according to an embodiment of the present invention;

FIG. 8A is a view for showing a structure of FIG 0/0;

FIG. 8B is a view for showing a structure of FIG 1/0;

FIG. 9 is a view for showing a structure of FIG 1/1;

FIG. 10 is a view for showing a structure of FIG 0/3;

FIG. 11 is a view for showing a structure of FIG 1/5;

FIG. 12 is a view for showing a structure of FIG 0/1;

FIG. 13 is a view for showing a memory structure according to an embodiment of the present invention;

FIG. 14 is a flow chart for showing operation flows for an ensemble selection;

FIG. 15 is a flow chart for showing operation flows for a service UP direction key;

FIG. 16 is a view for updating the memory for multiplex configuration information in step S215 of FIG. 15;

FIG. 17 is a flow chart for showing operation flows for a service DOWN direction key;

FIG. 18 is a view for updating the memory for multiplex configuration information in step S315 of FIG. 17;

FIG. 19 is a view for showing data for Set Short SubCh;

FIG. 20 is a view for showing data for Set Long SubCh;

FIG. 21 is a view for showing data for Set Packet Address;

FIG. 22 is a view for showing data for Read Global Status; and

FIG. 23 is a view for showing data for Read FIC Data.

### DETAILED DESCRIPTION OF THE PREFERRED EMBODIMENTS

Certain embodiments of the present invention will be described in greater detail with reference to the accompanying drawings.

In the following description, same drawing reference numerals are used for the same elements even in different drawings. The matters defined in the description such as a detailed construction and elements are nothing but the ones provided to assist in a comprehensive understanding of the invention. Thus, it is apparent that the present invention can be carried out without those defined matters. Also, well-known functions or constructions are not described in detail since they would obscure the invention in unnecessary detail.

FIG. 3 is a view for showing a structure of an FIB constructing the FIC. In FIG. 3, an FIB has plural FIGs in a data field of 30 bytes. Each FIG consists of an FIG header and an FIG data field, and the FIG header is allocated an FIG type of 3 bits, and the FIG data field is allocated an extension of 3 bits. In here, the FIG type indicates which information of the MCI, SI, and FIDC is included. Hereinafter, m in FIG m/n denotes the FIG type, and n in FIG m/n denotes the extension. The DAB/DMB system is mainly characterized in that it can multiplex and transmit data for plural programs in the same bandwidth as well as guarantee many channels based on high-density compression and decompression technologies for voice and data. The DAB/DMB system can provide users with diverse services, using the FIC information of the DAB transmission frame.

Descriptions will be made on a DAB/DMB system according to a first embodiment of the present invention. FIG. 4 is a block diagram for showing a DAB/DMB system according to an embodiment of the present invention. The DAB/DMB system includes an RF unit 10, a modem unit 20, a decoding unit 30, and a control unit 40. DAB signals transmitted from a broadcasting stations are sent to a signal reception antenna of the DAB system, the RF unit 10 tunes, intermediate-frequency-transforms, Analog/Digital (A/D)-converts, and applies to the modem unit 20 a DAB signal of a broadcasting station that a user wants out of the broadcasting stations. The modem unit 20 selects data corresponding to a broadcast program that a user wants out of broadcast programs that the selected broadcasting station is providing, and applies the data to the decoding unit 30. The decoding unit 30 decodes and D/A-converts audio and video signals in the selected broadcast program data respectively, and outputs the D/A-converted signals to a sound unit and a display unit respectively. The control unit 40 controls the operations of the RF unit 10 and the modem unit 20 according to user's demands.

The control unit 40 has a processor 45, a memory unit 46, a user interface unit 47, and a display unit 48.

If a user selects for inputs a broadcasting station and a broadcast program on the user interface unit 47, the processor 45 instructs the RF unit 10 to tune the corresponding broadcasting station, and instructs the modem unit 20 to select the corresponding broadcast program.

In order to provide the services that users want, an input unit and an liquid crystal display (LCD) panel are provided, in which the user interface 47 is used for the input unit for selecting a broadcasting station and a broadcast program and the display unit 48 is used for the LCD panel on behalf of users' inputs. FIG. 4 is a view for showing a structure of the user interface unit 47. The user interface unit 47 according to the present invention has a first operation button 47a for selecting ensembles, a second input key 47b for selecting services, and a third operation button 47c for selecting service components. The user interface unit 47 has buttons for selecting one of the items in the multiplex configuration with convenience when the users select a specific program out of multiple programs that the DAB/DMB in the multiplex configuration provides. As for the ensembles, a user can use one direction button to turn in a single direction, and, as for the services and service components, use UP and DOWN direction buttons to turn in two directions. On the other hand, the display unit 48 displays text information on selected contents based on the label information that the FIC provides according to the manipulation of each selection button, so as to help users select programs. For example, the display unit 47 displays the ensemble, service, and service component to which a broadcast program that a user currently listens to belongs, and also displays a list of the items which form the DAB multiplex configuration.

The control unit 40 decodes the FIC of a DAB transmission frame in order to operate the RF unit 10 and the modem unit 20 according to a user's instruction, and outputs a control signal to the RF unit 10 and the modem unit 20 according to the user's instruction. However, the European DAB standard has to, at maximum, support 64 sub-channels and 2³² services, which causes a problem that the control unit 40 decodes all the sub-channels and services. The present invention solves such a problem by use of the DAB multiplex configuration information that is necessarily required for modem operations.

Descriptions will be made on a DAB/DMB system and method which provides an identical broadcast program from a different ensemble when an output signal for a specific broadcast program has less intensity than a predetermined intensity for a predetermined time period or has noise, while a user is enjoying the specific broadcast program that a specific broadcasting station provides, according to a second embodiment of the present invention.

FIG. 5A is a flow chart for showing a process for providing a DAB/DMB-based program A (sports news program, for example) that an ensemble 2 (MBC broadcasting station, for example) offers, when the service conditions of an ensemble 1 (KBS broadcasting station, for example) become worsened while a user listens to the program A that the ensemble 1 offers. In FIG. 5A, a DAB system according to the present invention provides a user with the broadcast program A that the ensemble 1 offers according to a user's selection (S61). In FIG. 4, the processor 45 receives from the modem unit 20 and stores the DAB multiplex configuration information of the FIC. The decoding unit 30 checks the intensity and status of a signal of the broadcast signal A that is being serviced (S62), and compares the signal intensity and status with predetermined reference levels (S63). If the listening circumstances worse than the reference levels last, the decoding unit 30 sends a corresponding signal out to the processor 45. The processor 45 reads and decodes the DAB multiplex configuration information stored in the memory unit 46 to detect another ensemble (the ensemble 2, in here) that provides the broadcast program A.

The multiplex configuration information used in here is the FIG 0/2 shown in FIG. 5B. The FIG 0/2 includes information on multiple services, and distinguishes individual services by use of service identifiers (SId). Further, the FIG 0/2 includes information on multiple service components corresponding to each service.

The DAB transmission frame can have only two kinds of transmission modes, that is, a stream mode and a packet mode. The stream mode transmits only one service in one sub-channel, but the packet mode can transmit plural services in one sub-channel, and each packet is identified with a packet address and packets each having a different address are transmitted in one sub-channel in no order.

If the transmission frame is in stream mode, the FIG 0/2 includes a sub-channel identifier for plural sub-channels in which individual service components are physically transmitted. Each broadcast program is identified by an SId and a SubChId corresponding to each service component, and the SId and the SubChId of a specific service component that are included in the FIG 0/2 are read out so as to be used when the identical broadcast program is detected from another ensemble (S64).

If there exists the ensemble 2 having the same SId (S65), the processor 45 instructs the RF unit 10 to receive the ensemble 2 as well as instructs the modem unit 20 to select the broadcast program A, so that the program A which the ensemble 2 provides is serviced (S66).

Descriptions will be made on DAB system and method using the DAB multiplex configuration to provide contents that users want according to a third embodiment of the present invention.

When a user selects his or her desired contents, the present invention enables the user to select the contents in use of the multiplex configuration and the user interface 47 that are shown in FIG. 2. In FIG. 6, the arrows indicates the changing of selected options by use of the operation buttons of the user interface for looking up an ensemble, a service, and a service component

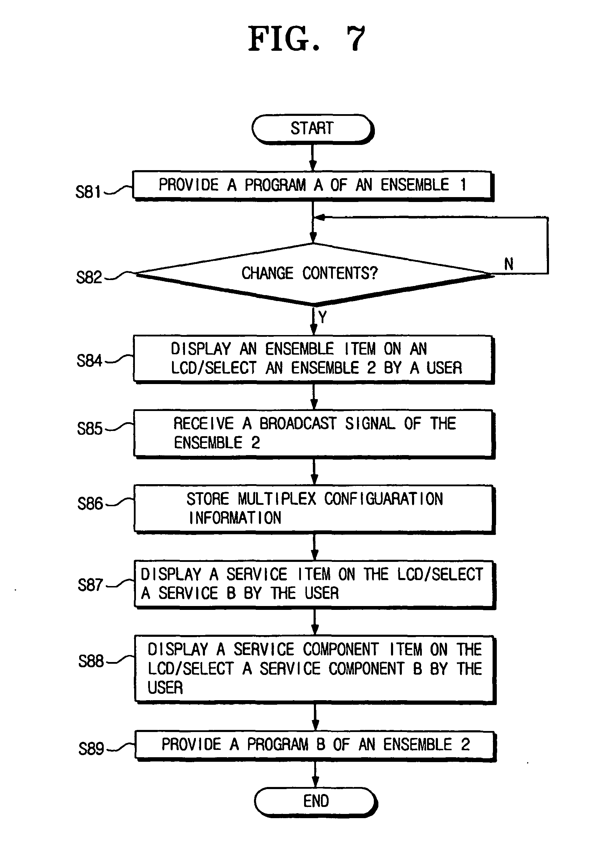

FIG. 7 is a flow chart for showing a process for servicing a program B of an ensemble 2 that a user wants who is listening to a program A of an ensemble 1 from the DAB system according to the present invention.

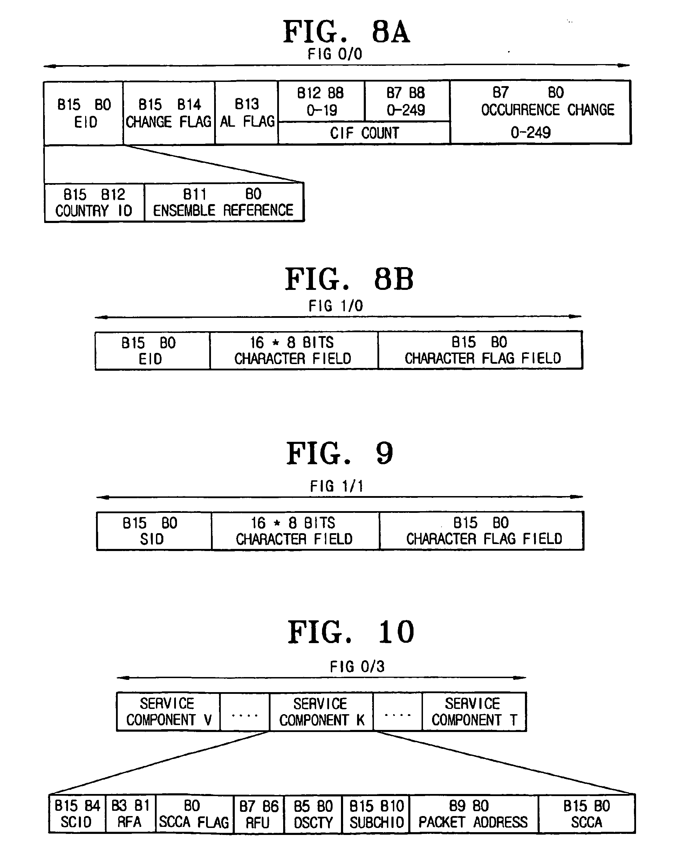

In FIG. 7, the DAB system provides the program A of the ensemble 1 (S81), wherein the program A is considered to be obtained from the hierarchical structure of ensemble 1, service A, and service component A. When a user wants to listen to a different program (for example, the program B that is considered to be obtained from the hierarchical structure of ensemble 2, service B, and service component B), the user manipulates the first operation button 47a to select the ensemble 2 (S84). The processor 45 decodes the FIG corresponding to the ensemble 2 stored in the memory unit. In FIG. 6, the FIGs for the ensemble are the FIG 0/0 and FIG 1/0. The FIG 0/0 contains ensemble information, and the FIG 1/0 contains ensemble label information. The structures of the FIG 0/0 and the FIG 1/0 are shown in FIG. 8A and FIG. 8B. If the ensemble 2 is selected, the processor 45 sends a corresponding signal to the RF unit in order for a broadcast signal provided in the ensemble 2 to be received (S85). The processor 45 stores the multiplex configuration information on the ensemble 2 in the memory unit 46 (S86).

Next, the user manipulates the second operation button (47b) to input what service he or she wants (S87). The processor 45 decodes a FIG corresponding to the service that the user inputs from the multiplex configuration information stored in the memory unit 46. The FIGs on service information are the FIG 0/2 and FIG 1/1. The FIG 0/2 contains information on the service as above, and FIG. 5B shows the structure of the FIG 0/2. The FIG 1/1 contains label information on the service, and FIG. 9 shows the structure of the FIG 1/1. The processor 45 sends a corresponding signal to the modem unit 20 in order for the modem unit 20 to select the corresponding service based on the information of FIG 0/2 and FIG 1/1.

Next, a user manipulates the third operation button 47c to input what service component he or she wants (S88). The processor 45 decodes the FIG corresponding to a service component the user inputs from the multiplex configuration information stored in the memory unit 46. If a transmission frame is in stream mode, the FIG 0/2 provides the information on the service component as above. The processor 45 sends a corresponding signal to the modem unit 20 in order for the modem unit 20 to select the corresponding service component based on the information of the FIG 0/2 and the FIG 1/1. The modem unit 20 sends corresponding sub-channel data to the decoding unit 30 so that the program B of the ensemble 2 is provided to the user (S89).

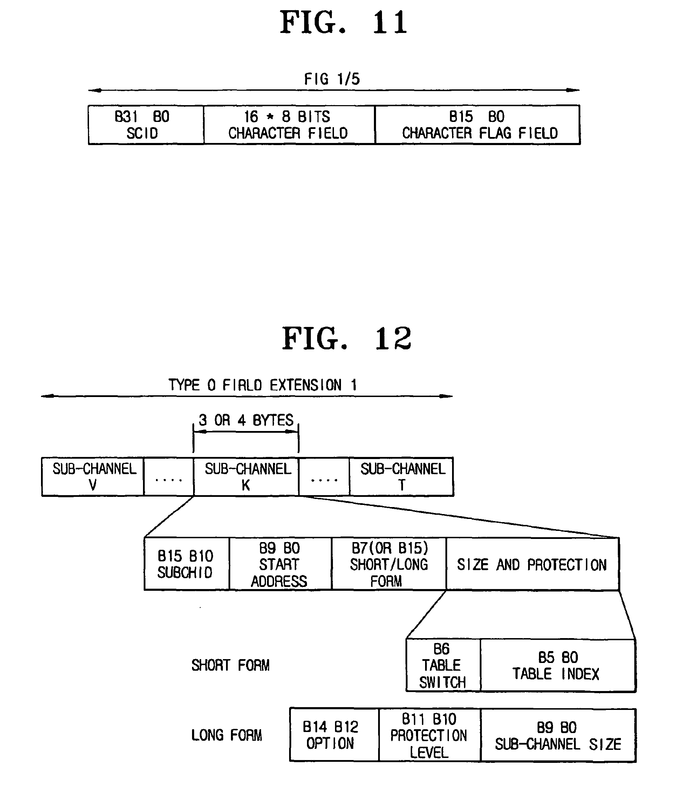

However, in packet mode, the FIG 0/2 provides only the information on SId and SCId, so more physical transmission information is required. That is, it is required to decode a FIG 0/3 providing the information on the SubChId and a packet address, and a FIG 1/5 is also decoded that provides the label information of the FIG 0/3. FIG. 10 and FIG. 11 are views for showing the structures of the FIG 0/3 and the FIG 1/5, respectively.

The processor 45 sends a corresponding signal to the modem unit 20 in order for the modem unit to select corresponding service component data based on the FIG 0/3 and the FIG 1/5. The FIG 0/1 contains the physical transmission information having contents that a user has selected. The FIG 0/1 is for sub-channels, which is shown in FIG. 12.

The SId has 32 bits as shown in FIG. 5. That is, 2³² services can be provided at maximum. However, the FIG 0/2 providing information on services to be provided is contained in plural FICs in one frame structure of FIG. 1, and an ensemble being serviced in Europe has less or more than 16 services. The number of services in a current ensemble can be detected by decoding only FICs in one frame. The memory size of 7.9Kbyte is required for the multiplex configuration information in order to provide users with 16 services by use of the multiplex configuration shown in FIG. 6. Therefore, services can not be properly provided if the memory unit 46 of the control unit 40 has the memory size less than the above.

Descriptions will be made on a method capable of solving a problem that the memory unit of the control unit has a memory size insufficient to store the multiplex configuration information according to a fourth embodiment of the present invention.

Before the descriptions on the method, it is assumed that parameters have sizes as below.

| | |
|---|---|
| Parameters | Sizes |
| 1. The number of services in an ensemble | n |
| 2. The memory size of the multiplex configuration information for n services | N-byte |
| 3. The memory size of the control unit | M-byte (M<N) |
| 4. The number of services to be stored in the memory in the present invention | k (k<n) |
| 5. The memory size of the multiplex configuration information for k services | K-byte (32*k<M) |

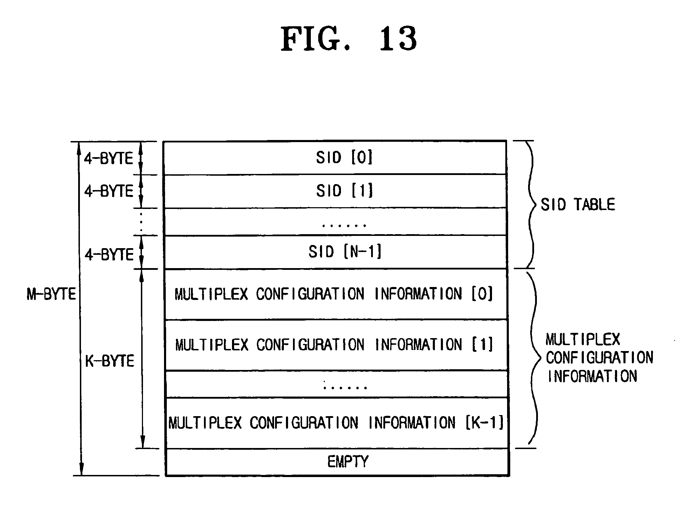

The circumstances presented in the above table show that the M-byte memory size of the control unit is insufficient to store all the multiplex configuration information for n services which an ensemble provides. Therefore, the present invention sequentially stores in the memory unit 46 4n-byte SId tables having SId information for n services and the K-byte multiplex configuration information for k services that a current ensemble provides, as shown in FIG. 13. In here, the k pieces of multiplex configuration information stored have to include multiplex configuration information for a service that a user is currently listening to.

The present invention decodes FICs belonging to one frame, tabulates service identifiers (service Ids) that a current ensemble provides, stores a corresponding area of the memory unit 46 to keep the minimum information on the services, and provides users with service information through the display unit 48 based on the information kept.

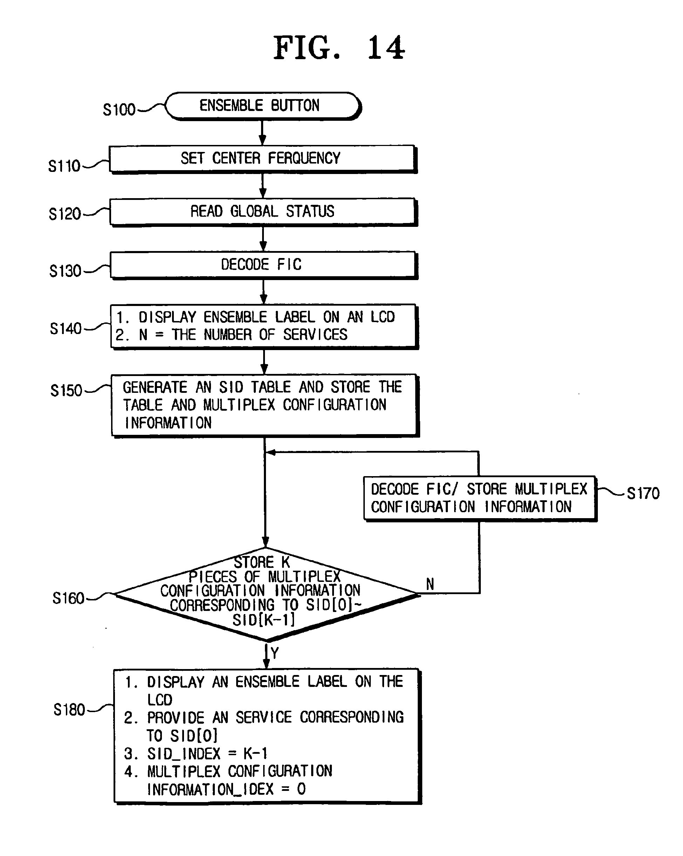

If a user selects a specific ensemble, services are provided according to a flow chart shown in FIG. 14. If a user selects a specific ensemble through the user interface unit 47 (S 100), the processor 45 gives a command (set center frequency) to the RF unit 10 in order for the RF unit 10 to receive the ensemble that the user has selected (S110), and then the processor 45 requests (read global status) the modem unit 20 to provide FIC information on one frame (S120). The processor 45 decodes the multiplex configuration information on the ensemble that has been selected from the FIC information received from the modem unit 20 (S130), and displays an ensemble label on the display unit 48 (S140). The processor 45 produces SId tables regarding n services based on FIC information, and reads k pieces of multiplex configuration information, and stores the tables and the multiplex configuration information in the memory unit 46 (S150). The FICs in one frame include SIds for all services in an ensemble through the FIG 0/2, but every information on the multiplex configuration corresponding to the services may not be included. Therefore, the processor 45 checks whether the k pieces of multiplex configuration information are stored in the memory unit 46 (S160), and consecutively requires and decodes the FICs of various frames until the k pieces of multiplex configuration information are stored (S 170). Lastly, the display unit 48 displays SId_index = K-1 and multiplex configuration information_index = 0 which are an SId label first stored in the SId table, and provides a user with a service of SId[0] (S 180). In here, the SId_index indicates the last SId stored in the multiplex configuration information stored in the SId table, and the multiplex configuration information_index indicates multiplex configuration information on a service being currently provided.

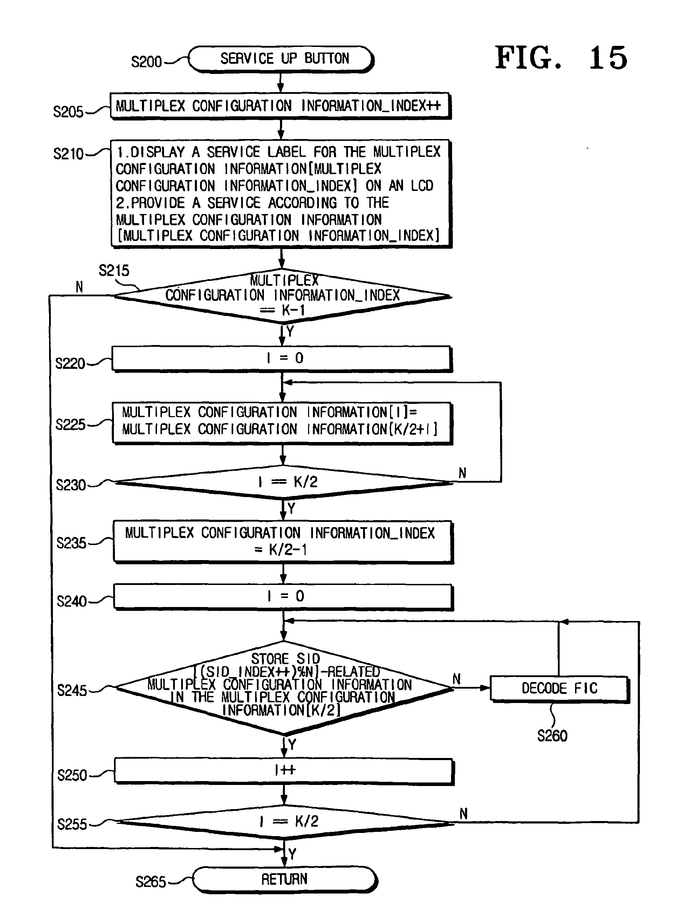

FIG. 15 is a flow chart for showing flows of operations of the UP direction button of the second operation button 47b for changing to a service that a user want to receive. If a user presses the UP direction button of the second operation buttons 47b (S200), the processor 45 reads out multiplex configuration information (multiplex configuration information_index++) stored next to multiplex configuration information (multiplex configuration information_index) being currently provided, and replaces the multiplex configuration information-index with the multiplex configuration information_index++ (S205). The processor 45 displays on the display unit 48 a service label on the multiplex configuration information_index, and provides a user with a service based on the multiplex configuration information_index (S210).

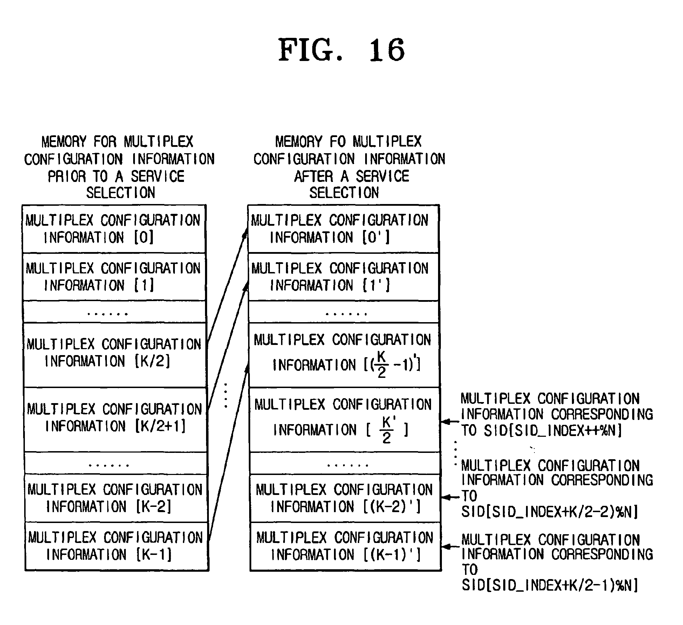

If the multiplex structure information_index = K - 1, that is, if the multiplex configuration information last stored is selected and a service based on the information is provided (S215), the processor 45 sequentially moves the multiplex configuration information stored at the (k/2+1)th to the kth so that the multiplex configuration information stored at the (k/2+1)th is stored at first and the multiplex configuration information stored at the kth is stored at the (k/2)th (S225). If the multiplex configuration information stored at the kth is selected, the processor 45 stores the selected multiplex configuration information at the middle location of a memory area for the multiplex configuration information, which is for providing multiplex configuration information not stored in the memory unit if a user selects the UP direction button of the second operation buttons 47b. FIG. 16 is a view for showing a process for updating the memory. The processor 45 decodes the FIC and stores in the (k/2+1)th to kth locations multiplex configuration information corresponding to k/2 SIds next to the SId of a service being currently provided (S260). The multiplex configuration information is changed not for the k new SIds but for the k/2 SIds in the memory for the multiplex configuration information, which is for avoiding a process of updating the memory for multiplex configuration information in the circumstances that a user keeps selecting the DOWN direction button other than the UP direction button. The step S235 indicates an index with respect to the currently servicing multiplex configuration information in the updated memory for multiplex configuration information. The step S245 shows the storage of multiplex configuration information regarding the k/2 SIds into the lower k/2 locations of the memory for multiplex configuration information, wherein the multiplex configuration information for the k/2 SIds is located below the SId for the currently servicing multiplex configuration information.

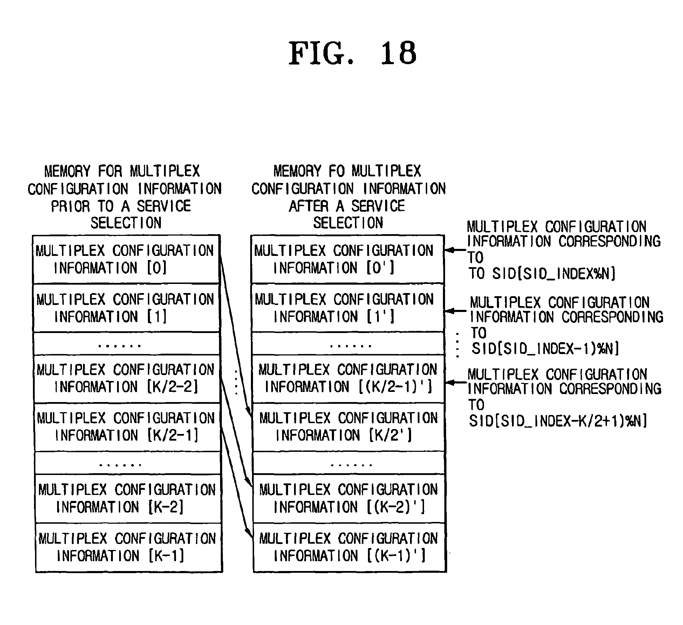

If a user selects the DOWN direction button of the second operation button 47b, services are provided according to a flow chart shown in FIG. 17. The difference from FIG. 15 is that the memory for multiplex configuration information operates opposite to the way that the UP direction button of the second operation buttons 47b is selected, as shown in FIG. 18, since the number of indices with respect to the multiplex configuration information is reduced.

If the multiplex configuration information_index = 0 due to the operations of the DOWN direction button, that is, if the multiplex configuration information stored at first is selected and a service based on the information is provided (S315), the processor 45 sequentially moves k/2 pieces of multiplex configuration information stored from the first to the (k/2)th to store the first stored multiplex configuration information at the (k/2+1)th location and the (k/2)th stored multiplex configuration information at the kth location respectively (S325). The processor 45 decodes the FIC and stores in the first to (k/2)th storage locations the pieces of multiple configuration information corresponding to k/2 SIds prior to the SId of a service being currently provided (S360). The multiplex configuration information is changed not for the k new SIds but for the k/2 SIds in the memory for the multiplex configuration information, which is for avoiding a process of updating the memory for multiplex configuration information in the circumstances that a user keeps selecting the DOWN direction button other than the UP direction button.

A command set is established to provide a minimum function for operating the modem unit 20 of the DAB/DMB system according to a fifth embodiment of the present invention. The command set consists of 7 commands as below.
Set Center Frequency
Set Short SubCh : 0xFF06
Set Long SubCh : 0xFF07
Set Packet Address: 0xFF08
Read Global Status: 0xFF20
Read FIC Data: 0xFF3X
Set Video Service

The present invention does not define fixed forms for Set Center Frequency and Set Video Service since the two are not directly connected to the modem unit 20 for operations. The Set Center Frequency has only to provide a simple function of receiving a response of a safe receipt from the RF unit 10 if a desired frequency is sent to the RF unit 10. Basically, since the European DAB provides audio services first, the Set Video Service instructs a data decoder in a form of flag with respect to video services.

The control unit 40 first sends 0xFF as head information when sending the Command Set, which notifies that the data currently sent to the modem unit 20 from the control unit 40 is the beginning of the Command Set. The modem unit 20 detects an input of the Command Set when receiving 0xFF, and sends 0xFE to a control unit 40 as a response. 0xFE is taken as response data rather than 0xFF, which is because a data register provided in the modem unit 20 and communicating with the control unit 40 sends received data itself in the circumstances that, when the control unit 40 has sent 0xFF as to the Command Set, the modem unit 20 does not detect nor respond to 0xFF due to other tasks. Accordingly, the response of 0xFF can cause the modem unit 20 to decide the receipt of the Command Set even though the modem unit 20 does not receive the Command Set, which can cause the malfunction of the modem unit 20.

If the modem unit 20 sends 0xFE as a response with respect to the Command Set, the control unit 40 sends one remaining byte identifying each of the Command sets. For example, the control unit 40 sends 0x06 to the modem unit 20 with respect to Set Short SubCh. Next, the modem unit 20 operates for Set Short SubCh, Set Long SubCh, and Set Packet Address in a different manner from for Read Global Status and Read FIC Data.

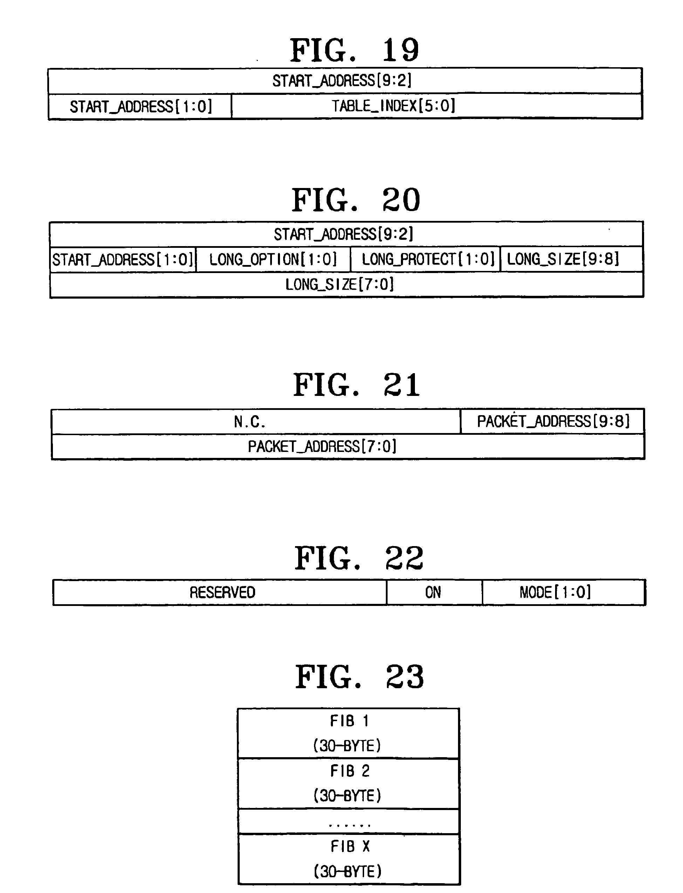

The control unit 40 receives 0xFE as a response from the modem unit 20 with respect to Set Short SubCh, Set Long SubCh, and Set Packet Address, sends an identification byte, and sends data shown in FIG. 19 to FIG. 21. FIG. 19 and FIG. 20 show data sent after the FIG 0/1 shown in FIG. 17 is decoded, and FIG. 21 shows data sent after the FIG 0/3 shown in FIG. 10 is decoded.

The Set Packet Address supports the packet mode of the modes that the MSC of the DAB has. The Set Packet Address is a command that the control unit notifies the modem unit of address information on packets containing certain contents. The Set Packet Address supports the packet mode only, whereas the other Command set supports both the stream mode and the packet mode. N.C stands for No Care, which means that no care is taken as to input data.

In the operations for Read Global Status and Read FIC Data, the control unit 40 first sends 0xFF, and then receives 0xFE as a response from the modem unit 20. Next, the control unit 40 sends 0x20 and 0x3X which are bytes identifying the Command Set. For the next operations, the control unit 40 receives data shown in FIG. 22 and FIG. 23. The ON in FIG. 22 indicates that the modem unit is operating, and the MODE indicates any of four DAB transmission modes. Mode 1 is set to 0x00, mode 2 to 0x01, mode 3 to 0x10, and mode 4 to 0x11. The value of X is set depending on modes for the number of FIBs shown in FIG. 23. The value of X is set to 12 for the mode 1, 3 for the mode 2, 4 for the mode 3, and 6 for the mode 4.

The Read Global Status and Set Center Frequency are a Command Set necessary for operations according to the selection of the ensemble of FIG. 14. The Read FIC Data is a Command Set necessary to provide services shown in FIG. 14, FIG. 15, and FIG. 17.

The DAB/DMB system according to the present invention has a user interface unit using the DAB multiplex configuration so that a user can easily input his or her desired contents, and, in controlling the RF unit and the modem unit, can reduce loads on the control unit by use of the DAB multiplex configuration information as above. Further, the present invention can store an SId table and predetermined multiplex configuration information in the memory unit, and update only a part of the information depending on conditions, to thereby efficiently use the memory space. The Command Set provided in the present invention can support transmission frames in both the stream mode and the packet mode.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

### The following is a list of further preferred embodiments of the invention:

Embodiment 1: A digital audio broadcasting/digital multimedia broadcasting receiver comprising:
   a radio frequency unit for receiving a first broadcast signal transmitted from a first broadcasting station selected from plural broadcasting stations transmitting digital audio broadcasting transmission frames;
   a modem unit for selecting first content out of plural contents contained in the first broadcast signal that the radio frequency unit receives, and outputting corresponding data;
   a decoding unit for receiving and decoding the data of the first content outputted from the modem unit; and
   a control unit for generating a control signal for controlling the radio frequency unit and the modem unit based on digital audio broadcasting multiplex configuration information contained in the first broadcast signal.
Embodiment 2: The digital audio broadcasting/digital multimedia broadcasting receiver of embodiment 1, wherein the control unit includes:
   a user interface unit for providing an input means for desired broadcasting station and contents;
   a memory unit for storing the digital audio broadcasting multiplex configuration information;
   a processor for generating the control signal according to an input signal based on the digital audio broadcasting multiplex configuration information stored in the memory unit, and sending the control signal to the radio frequency unit and the modem unit; and
   a display unit for displaying the digital audio broadcasting multiplex configuration information stored according to a signal inputted through the user interface unit.
Embodiment 3: The digital audio broadcasting/digital multimedia broadcasting receiver of embodiment 2, wherein the digital audio broadcasting multiplex configuration information is information on ensembles, services, and service components consisting of digital audio broadcasting multiplex configuration hierarchy.
Embodiment 4: The digital audio broadcasting/digital multimedia broadcasting receiver of embodiment 2 or 3, wherein, if the first broadcast signal containing the first content is received at a lower level than a predetermined reference level, a second broadcast signal containing the first content is received.
Embodiment 5: The digital audio broadcasting/digital multimedia broadcasting receiver of embodiment 4, wherein, if the digital audio broadcasting transmission frame is in stream mode, the digital audio broadcasting multiplex configuration information is FIG 0/2 containing the information on the services, and FIG 0/2 stands for Fast Information Group type 0, extension 2.
Embodiment 6: The digital audio broadcasting/digital multimedia broadcasting receiver of embodiment 4 or 5, wherein, if the transmission frame is in packet mode, the digital audio broadcasting multiplex configuration information is the FIG 0/2 containing the information on the services and FIG 0/3 containing the information on the service components.
Embodiment 7: The digital audio broadcasting/digital multimedia broadcasting receiver of embodiments 2 to 6, wherein, if the first broadcast station is required to be tuned through the user interface unit, the digital audio broadcasting multiplex configuration information is FIG 0/0 containing the information on the ensembles and FIG 1/0 containing the information on ensemble labels.
Embodiment 8: The digital audio broadcasting/digital multimedia broadcasting receiver of embodiments 2 to 7, wherein, if the first content is required through the user interface unit and the transmission frame is in stream mode, the digital audio broadcasting multiplex configuration information is FIG 0/2 containing information on services and FIG 1/1 containing label information on services.
Embodiment 9: The digital audio broadcasting/digital multimedia broadcasting receiver of embodiments 2 to 8, wherein, if the first content is required through the user interface unit and the transmission frame is in packet mode, the digital audio broadcasting multiplex configuration information is FIG 0/2 and FIG 0/3 containing information on service components and FIG 1/1 and FIG 1/5 containing label information on service components.
Embodiment 10: The digital audio broadcasting/digital multimedia broadcasting receiver of embodiment 9, wherein Command Sets for communications between the control unit and the modem unit include commands for notifying of address information on packets containing the first content.
Embodiment 11: The digital audio broadcasting/digital multimedia broadcasting receiver of embodiments 2 to 10, wherein the user interface unit includes:
   a first operation button formed of one direction button for outputting an input signal selecting an ensemble;
   a second operation button formed of two direction buttons each outputting an input signal selecting a service; and
   a third operation button formed of two direction buttons each outputting an input signal selecting a service component.
Embodiment 12: The digital audio broadcasting/digital multimedia broadcasting receiver of embodiments 2 to 11, wherein, if the memory unit has memory space insufficient to store the entire multiplex configuration information, the processor sequentially tabulates identifiers for identifying individual services, for example, n services, that the first broadcast signal provides so as to generate a service identifier table.
Embodiment 13: The digital audio broadcasting/digital multimedia broadcasting receiver of embodiment 12, wherein the memory unit sequentially stores the service identifier table and k pieces of multiplex configuration information on the services including a service being currently received.
Embodiment 14: The digital audio broadcasting/digital multimedia broadcasting receiver of embodiment 13, wherein, if a kth stored multiplex configuration information is read out according to an input signal, multiplex configuration information stored from the (k/2+1)th to the kth moves into memory locations in which multiplex configuration information stored from the first to the (k/2)th, and k/2 pieces of multiplex configuration information after the (k/2)th stored multiplex configuration information is sequentially stored in the (k/2+1)th to kth memory locations.
Embodiment 15: The digital audio broadcasting/digital multimedia broadcasting receiver of embodiment 13 or 14, wherein, if a first stored multiplex configuration information is read according to the input signal, multiplex configuration information stored from the first to the (k/2)th moves into memory locations in which multiplex configuration information stored from the (k/2+1)th to the kth is stored, and k/2 pieces of multiplex configuration information prior to the (k/2+1)th stored multiplex configuration information are sequentially stored in the first to (k/2)th memory locations.
Embodiment 16: A digital audio broadcasting/digital multimedia broadcasting broadcast signal reception method, comprising steps of:
   (a) receiving a first broadcast signal transmitted from a first broadcasting station selected out of plural broadcasting stations transmitting digital audio broadcasting transmission frames, and selecting and outputting first content of plural contents contained in the first broadcast signal;
   (b) checking a reception state of the first broadcast signal containing the first content;
   (c) detecting a second broadcasting station providing the first content based on the digital audio broadcasting multiplex configuration information on the digital audio broadcasting transmission frame that the first broadcasting station transmits, if the reception state of the first broadcast signal is lower than a predetermined reference level in the step (b); and
   (d) receiving a second broadcast signal transmitted from the second broadcasting station, and selecting and outputting the first content contained in the second broadcast signal.
Embodiment 17: The digital audio broadcasting/digital multimedia broadcasting broadcast signal reception method of embodiment 16, wherein, if the transmission frame is in stream mode, the digital audio broadcasting multiplex configuration information is FIG 0/2 containing information on services.
Embodiment 18: The digital audio broadcasting broadcast signal reception method of embodiment 16 or 17, wherein, if the transmission frame is in packet mode, the digital audio broadcast multiplex configuration information is FIG 0/2 containing information on services and FIG 0/3 containing information on service components.
Embodiment 19: A desired contents reception method in a digital audio broadcasting/digital multimedia broadcasting broadcast signal, receiving a first broadcast signal transmitted from a first broadcasting station selected from plural broadcasting stations transmitting digital audio broadcasting transmission frames, and selecting and outputting first content desired out of plural contents contained in the first broadcast signal, comprising steps of:
   (a) displaying options of a digital audio broadcasting multiplex configuration consisting of ensembles, services, and service components, and selecting any of the options;
   (b) displaying a list of the ensembles if the ensembles option is selected from the step (a), and selecting any of the ensembles;
   (c) receiving the first broadcast signal of the first broadcasting station corresponding to an ensemble selected in the step (b), and storing the digital audio broadcasting multiplex configuration information of the digital audio broadcasting transmission frame contained in the first broadcast signal;
   (d) displaying a list of the services provided in the selected ensemble based on the stored digital audio broadcasting multiplex configuration information if the services item is selected in the step (a), and selecting any of the services;
   (e) displaying a list of the service components contained in the selected service based on the stored digital audio broadcasting multiplex configuration information if the service components option is selected in the step (a), and selecting any of the service components; and
   (f) selecting and outputting the first content in the received first broadcast signal corresponding to the selected service component.
Embodiment 20: The contents reception method of embodiment 19, wherein the digital audio broadcasting multiplex configuration information in the step (d) is FIG 0/2 containing information on the services and FIG 1/1 containing information on service labels.
Embodiment 21: The contents reception method of embodiment 19 or 20, wherein, if the digital audio broadcasting transmission frame is in stream mode, the digital audio broadcasting multiplex configuration information in the step (e) is the FIG 0/2 containing the information on the services and the FIG 1/1 containing the information on the service labels.
Embodiment 22: The contents reception method of embodiments 19 to 21, wherein, if the digital audio broadcasting transmission frame is in packet mode, the digital audio broadcasting multiplex configuration information in the step (e) is FIG 0/2 and FIG 0/3 containing information on the services and the service components and FIG 1/1 and FIG 1/5 containing information on service component labels.
Embodiment 23: A method for storing digital audio broadcasting multiplex configuration information of a digital audio broadcasting broadcast signal, receiving a first broadcast signal transmitted from a first broadcasting station selected from plural broadcasting stations transmitting digital audio broadcasting transmission frames and storing digital audio broadcasting multiplex configuration information contained in a first broadcast signal, comprising steps of:
   (a) sequentially tabulating identifiers for identifying individual services, for example, n services that the first broadcast signal provides, and generating a service identifier table; and
   (b) sequentially storing in a memory unit the service identifier table and the multiplex configuration information on k (k<n) services including a service being currently received.
Embodiment 24: The method of embodiment 23, wherein, if a kth stored multiplex configuration information is read out according to an input signal, multiplex configuration information stored from the (k/2+1)th to the kth moves into memory locations in which multiplex configuration information stored from the first to the (k/2)th, and k/2 pieces of multiplex configuration information after the (k/2)th stored multiplex configuration information is sequentially stored in the (k/2+1)th to kth memory locations.
Embodiment 25: The method of embodiment 23 or 24, wherein, if a first stored multiplex configuration information is read according to the input signal, multiplex configuration information stored from the first to the (k/2)th moves into memory locations in which multiplex configuration information stored from the (k/2+1)th to the kth is stored, and k/2 pieces of multiplex configuration information prior to the (k/2+1)th stored multiplex configuration information are sequentially stored in the first to (k/2)th memory locations.

## Claims

1. A desired contents reception method in a digital audio broadcasting/digital multimedia broadcasting broadcast signal, receiving a first broadcast signal transmitted from a first broadcasting station selected from plural broadcasting stations transmitting digital audio broadcasting transmission frames, and selecting and outputting first content desired out of plural contents contained in the first broadcast signal, comprising steps of:
(a) displaying options of a digital audio broadcasting multiplex configuration consisting of ensembles, services, and service components, and selecting any of the options;
(b) displaying a list of the ensembles if the ensembles option is selected from the step (a), and selecting any of the ensembles;
(c) receiving the first broadcast signal of the first broadcasting station corresponding to an ensemble selected in the step (b), and storing the digital audio broadcasting multiplex configuration information of the digital audio broadcasting transmission frame contained in the first broadcast signal;
(d) displaying a list of the services provided in the selected ensemble based on the stored digital audio broadcasting multiplex configuration information if the services item is selected in the step (a), and selecting any of the services;
(e) displaying a list of the service components contained in the selected service based on the stored digital audio broadcasting multiplex configuration information if the service components option is selected in the step (a), and selecting any of the service components; and
(f) selecting and outputting the first content in the received first broadcast signal corresponding to the selected service component.

2. The contents reception method as claimed in claim 1, wherein the digital audio broadcasting multiplex configuration information in the step (d) is FIG 0/2 containing information on the services and FIG 1/1 containing information on service labels.

3. The contents reception method as claimed in claim 1 or 2, wherein, if the digital audio broadcasting transmission frame is in stream mode, the digital audio broadcasting multiplex configuration information in the step (e) is the FIG 0/2 containing the information on the services and the FIG 1/1 containing the information on the service labels.

4. The contents reception method as claimed in one of claims 1 to 3, wherein, if the digital audio broadcasting transmission frame is in packet mode, the digital audio broadcasting multiplex configuration information in the step (e) is FIG 0/2 and FIG 0/3 containing information on the services and the service components and FIG 1/1 and FIG 1/5 containing information on service component labels.

5. A method for storing digital audio broadcasting multiplex configuration information of a digital audio broadcasting broadcast signal, receiving a first broadcast signal transmitted from a first broadcasting station selected from plural broadcasting stations transmitting digital audio broadcasting transmission frames and storing digital audio broadcasting multiplex configuration information contained in a first broadcast signal, comprising steps of:
(a) sequentially tabulating identifiers for identifying individual services, for example, n services that the first broadcast signal provides, and generating a service identifier table; and
(b) sequentially storing in a memory unit the service identifier table and the multiplex configuration information on k (k<n) services including a service being currently received.

6. The method as claimed in claim 5, wherein, if a kth stored multiplex configuration information is read out according to an input signal, multiplex configuration information stored from the (k/2+1)th to the kth moves into memory locations in which multiplex configuration information stored from the first to the (k/2)th, and k/2 pieces of multiplex configuration information after the (k/2)th stored multiplex configuration information is sequentially stored in the (k/2+1)th to kth memory locations.

7. The method as claimed in claim 5 or 6, wherein, if a first stored multiplex configuration information is read according to the input signal, multiplex configuration information stored from the first to the (k/2)th moves into memory locations in which multiplex configuration information stored from the (k/2+1)th to the kth is stored, and k/2 pieces of multiplex configuration information prior to the (k/2+1)th stored multiplex configuration information are sequentially stored in the first to (k/2)th memory locations.

8. A digital audio broadcasting/digital multimedia broadcasting receiver comprising:
a radio frequency unit for receiving a first broadcast signal transmitted from a first broadcasting station selected from plural broadcasting stations transmitting digital audio broadcasting transmission frames;
a modem unit for selecting first content out of plural contents contained in the first broadcast signal that the radio frequency unit receives, and outputting corresponding data;
a decoding unit for receiving and decoding the data of the first content outputted from the modem unit; and
a control unit for generating a control signal for controlling the radio frequency unit and the modem unit based on digital audio broadcasting multiplex configuration information contained in the first broadcast signal,
wherein the control unit includes:
a user interface unit for providing an input means for desired broadcasting station and contents;
a memory unit for storing the digital audio broadcasting multiplex configuration information;
a processor for generating the control signal according to an input signal based on the digital audio broadcasting multiplex configuration information stored in the memory unit, and sending the control signal to the radio frequency unit and the modem unit; and
a display unit for displaying the digital audio broadcasting multiplex configuration information stored according to a signal inputted through the user interface unit,
wherein the user interface unit includes:
a first operation button formed of one direction button for outputting an input signal selecting an ensemble;
a second operation button formed of two direction buttons each outputting an input signal selecting a service; and
a third operation button formed of two direction buttons each outputting an input signal selecting a service component.

9. A digital audio broadcasting/digital multimedia broadcasting receiver comprising:
a radio frequency unit for receiving a first broadcast signal transmitted from a first broadcasting station selected from plural broadcasting stations transmitting digital audio broadcasting transmission frames;
a modem unit for selecting first content out of plural contents contained in the first broadcast signal that the radio frequency unit receives, and outputting corresponding data;
a decoding unit for receiving and decoding the data of the first content outputted from the modem unit; and
a control unit for generating a control signal for controlling the radio frequency unit and the modem unit based on digital audio broadcasting multiplex configuration information contained in the first broadcast signal,
wherein the control unit includes:
a user interface unit for providing an input means for desired broadcasting station and contents;
a memory unit for storing the digital audio broadcasting multiplex configuration information;
a processor for generating the control signal according to an input signal based on the digital audio broadcasting multiplex configuration information stored in the memory unit, and sending the control signal to the radio frequency unit and the modem unit; and
a display unit for displaying the digital audio broadcasting multiplex configuration information stored according to a signal inputted through the user interface unit,
wherein, if the memory unit has memory space insufficient to store the entire multiplex configuration information, the processor sequentially tabulates identifiers for identifying individual services, for example, n services, that the first broadcast signal provides so as to generate a service identifier table.

10. The digital audio broadcasting/digital multimedia broadcasting receiver as claimed in claim 9, wherein the memory unit sequentially stores the service identifier table and k pieces of multiplex configuration information on the services including a service being currently received.

11. The digital audio broadcasting/digital multimedia broadcasting receiver as claimed in claim 10, wherein, if a kth stored multiplex configuration information is read out according to an input signal, multiplex configuration information stored from the (k/2+1)th to the kth moves into memory locations in which multiplex configuration information stored from the first to the (k/2)th, and k/2 pieces of multiplex configuration information after the (k/2)th stored multiplex configuration information is sequentially stored in the (k/2+1)th to kth memory locations.

12. The digital audio broadcasting/digital multimedia broadcasting receiver as claimed in claim 10 or 11, wherein, if a first stored multiplex configuration information is read according to the input signal, multiplex configuration information stored from the first to the (k/2)th moves into memory locations in which multiplex configuration information stored from the (k/2+1)th to the kth is stored, and k/2 pieces of multiplex configuration information prior to the (k/2+1)th stored multiplex configuration information are sequentially stored in the first to (k/2)th memory locations.

13. The digital audio broadcasting/digital multimedia broadcasting receiver as claimed in one of claims 8 to 12, wherein the digital audio broadcasting multiplex configuration information is information on ensembles, services, and service components consisting of digital audio broadcasting multiplex configuration hierarchy.

14. The digital audio broadcasting/digital multimedia broadcasting receiver as claimed in one of claims 8 to 13, wherein, if the first broadcast signal containing the first content is received at a lower level than a predetermined reference level, a second broadcast signal containing the first content is received,
wherein, if the digital audio broadcasting transmission frame is in stream mode, the digital audio broadcasting multiplex configuration information is FIG 0/2 containing the information on the services, and FIG 0/2 stands for Fast Information Group type 0, extension 2, and
wherein, if the transmission frame is in packet mode, the digital audio broadcasting multiplex configuration information is the FIG 0/2 containing the information on the services and FIG 0/3 containing the information on the service components.

15. The digital audio broadcasting/digital multimedia broadcasting receiver as claimed in one of claims 8 to 14, wherein, if the first broadcast station is required to be tuned through the user interface unit, the digital audio broadcasting multiplex configuration information is FIG 0/0 containing the information on the ensembles and FIG 1/0 containing the information on ensemble labels,
wherein, if the first content is required through the user interface unit and the transmission frame is in stream mode, the digital audio broadcasting multiplex configuration information is FIG 0/2 containing information on services and FIG 1/1 containing label information on services,
wherein, if the first content is required through the user interface unit and the transmission frame is in packet mode, the digital audio broadcasting multiplex configuration information is FIG 0/2 and FIG 0/3 containing information on service components and FIG 1/1 and FIG 1/5 containing label information on service components, and
wherein Command Sets for communications between the control unit and the modem unit include commands for notifying of address information on packets containing the first content.
